Europäisches Patentamt

European Patent Office

Office européen des brevets

(19)

(11) EP 0 542 974 B1

# (12) FASCICULE DE BREVET EUROPEEN

(45) Date de publication et mention
de la délivrance du brevet:
**03.09.1997 Bulletin 1997/36**

(21) Numéro de dépôt: **92912287.7**

(22) Date de dépôt: **09.06.1992**

(51) Int Cl.6: **H04N 7/24**, H04N 7/32

(86) Numéro de dépôt international:
**PCT/FR92/00514**

**WO 92/22985 (23.12.1992 Gazette 1992/32)**

(54) **Codeur-Décodeur sous-bandes de signaux de télévision à niveaux de résolution différents.**

Teilband-Koder und Dekoder für Fernsehsignale mit verschiedenen Auflösungswerten.

Variable resolution level television signal subband CODEC.

(84) Etats contractants désignés:
**AT BE CH DE DK ES FR GB GR IT LI LU MC NL SE**

(30) Priorité: **11.06.1991 FR 9107074**

(43) Date de publication de la demande:
**26.05.1993 Bulletin 1993/21**

(73) Titulaire: **THOMSON multimedia
92400 Courbevoie (FR)**

(72) Inventeurs:
 • **TOURTIER, Philippe
  F-92045 Paris-La Défense Cédex 67 (FR)**
 • **VIAL, Jean-François
  F-92045 Paris-La Défense Cédex 67 (FR)**
 • **DIASCORN, Jean-Louis
  F-92045 Paris-La Défense Cédex 67 (FR)**
 • **PECOT, Michel
  F-92045 Paris-La Défense Cédex 67 (FR)**

(74) Mandataire: **Ruellan-Lemonnier, Brigitte et al
THOMSON multimedia,
46 quai A. Le Gallo
92648 Boulogne Cédex (FR)**

(56) Documents cités:
 EP-A- 0 262 109          FR-A- 2 643 531
 FR-A- 2 654 887          FR-A- 2 661 062
 US-A- 4 817 182          US-A- 4 827 336
 US-A- 4 937 666

 • IEEE International Symposium on Circuits and
   Systems, New Orleans, LA, 1-3 mai 1990, vol. 2,
   P.E. FLEISCHER et al.: "Coding of advanced TV
   for BISDN using multiple subbands", pages
   1314-1318, voir figure 2a
 • ICASSP'89, Glasgow, 23-26 mai 1989, vol. 3, P.H.
   WESTERINK et al.: "Progressive transmission of
   images using subband coding", pages
   1811-1814, voir en entier
 • IEEE Transactions on Circuits and Systems for
   Video Technology, vol. 1, no. 2, juin 1991, (New
   York, US), H. GHARAVI: "Subband coding
   algorithms for video applications: videophone
   to HDTV-conferencing", pages 174-183, voir
   résumé

**Description**

La présente invention concerne un codeur-décodeur sous-bandes de signaux de télévision à différents niveaux de compatibilité.

Elle s'applique notamment aux systèmes de transmission et de réception de signaux vidéo numériques.

Dans les systèmes de transmission d'images de télévision la multiplication des formats de résolution employés pour la télévision classique entrelacée, le vidéotéléphone, la télévision progressive, et l'avènement des systèmes de télévision à haute résolution entrelacée ou progressive rendent nécessaires l'élaboration de systèmes de codage compatibles, quels que soient les sens ascendant et descendant des résolutions.

Dans la compatibilité ascendante un récepteur travaillant dans un format vidéo déterminé doit pouvoir recevoir et visualiser un signal transmis suivant un format plus élevé, c'est-à-dire un format selon lequel la résolution du signal est plus grande. C'est le cas par exemple, d'un signal de télévision haute définition progressive connu sous l'abréviation HDTV qui possède lui-même un format plus élevé que celui d'un signal de télévision entrelacé classique. Inversement dans le cas d'une compatibilité descendante un récepteur doit pouvoir recevoir et visualiser un signal de résolution moindre que son format de travail. Naturellement les diversités des résolutions entraînent une diversité des dispositifs de codage et de décodage à mettre en oeuvre et compliquent considérablement la gestion des communications.

Une solution à ces problèmes qui est connue de la demande de brevet FR-A-2 654 887 déposée également au nom de la Demanderesse, consiste à effectuer au niveau des codeurs d'émission un découpage de chaque image à transmettre en sous-bandes suivant une même structure arborescente par filtrage et décimation de la bande de fréquence spatiale des signaux à transmettre quelle que soit leur famille d'appartenance, de façon à coder indépendamment les signaux de chaque sous-bande avant de les transmettre par multiplexage sur le canal de transmission. En réception les décodeurs effectuent le démultiplexage des signaux codés reçus dans chaque sous-bande en décodant les signaux relatifs à chaque sous-bande en fonction de la résolution des signaux transmis et de la résolution propre des récepteurs. Cependant pour que cette solution reste efficace lorsque le débit sur le canal de transmission diminue et pour éviter par exemple que pour des débits inférieurs à 1,4 bits par pixel la qualité visuelle des images observées se dégrade, il est nécessaire d'introduire un codage inter-image supplémentaire tenant compte de la corrélation temporelle naturelle des séquences d'images, ce codage inter-image supplémentaire pouvant consister en un codage différentiel avec compensation de mouvement au niveau de chaque sous-bande. Naturellement la compensation du mouvement est effectuée au niveau des sous-bandes et non au niveau de l'image pleine définition (c'est-à-dire l'image non décomposée) de manière à assurer un codage compatible des images et à éviter des phénomènes de dérive au niveau des décodeurs compatibles. L'estimation du mouvement a lieu sur les images non décomposées suivant une technique connue sous la désignation "block matching" suivant laquelle l'image est découpée en blocs, un vecteur mouvement par bloc étant déterminé par un calcul de corrélation. Cette technique permet d'obtenir des vecteurs mouvements calculés en nombres entiers de pixels. Une estimation de vecteurs à la précision demi-pixel peut aussi être obtenue en interpolant d'abord les images par exemple avec un filtre bilinéaire. Les vecteurs mouvements peuvent ainsi être divisés par le taux de sous échantillonnage de chaque sous-bande considérée afin de servir de base aux compensations de mouvement à effectuer dans chacune d'elles. Les procédures correspondantes consistent au lieu de retirer le pixel en vis à vis codé de la sous-bande précédente de la valeur du pixel à coder, à retirer la valeur d'un pixel voisin dont les coordonnées sont calculées en fonction de ces vecteurs mouvements. Ainsi, lorsque les composantes du vecteur mouvement sont entières, le problème se réduit uniquement à un problème d'adressage mémoire, car il suffit d'aller chercher en mémoire un pixel existant. Par contre, lorsque le vecteur mouvement ne correspond pas à un nombre entier de pixels la valeur du pixel recherché ne peut être qu'interpolée. Cependant les procédés connus d'interpolation à une bande donnée conduisent à utiliser plusieurs filtres longs pour tenir compte des informations contenues dans les bandes adjacentes, ce qui pose des problèmes de réalisation difficiles à résoudre.

Le but de l'invention est de pallier les inconvénients précités.

A cet effet, l'invention a pour objet, un codeur-décodeur sous bandes de signaux de télévision à niveaux de compatibilité différents tel que défini à la revendication 1.

D'autres caractéristiques et avantages de l'invention apparaîtront dans la description qui suit faite en regard des dessins annexés qui représentent :

- La figure 1 une décomposition du spectre d'un signal de télévision de standard HDP en sous-bandes EDP et VT ;
- La figure 2 une décomposition du spectre de la figure 1 suivant un arbre de décomposition à seize bandes ;
- La figure 3 un maillage de pixels montrant le principe d'interpolation pour reconstruire un pixel décimé dans une sous-bande en fonction du vecteur mouvement accompagnant ce pixel dans l'image ;
- La figure 4 un tableau récapitulatif des sous-bandes permises et adjacentes à une sous-bande donnée pouvant être utilisée pour le calcul d'interpolation de pixel dans une image ;
- les figures 5 et 6 un mode de réalisation d'un dispositif de compensation de mouvement selon l'invention ;

- La figure 7 un mode de réalisation d'un codeur décodeur mettant en oeuvre le dispositif de compensation de mouvement des figures 5 et 6.

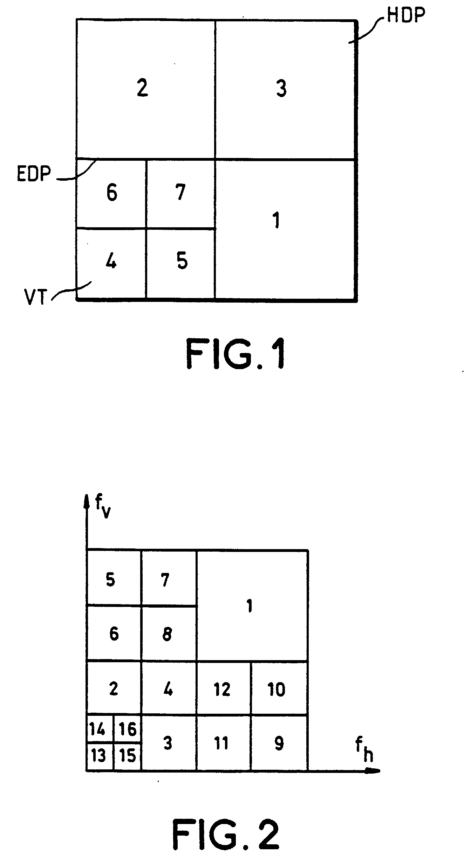

Dans la mise en oeuvre de l'invention, le spectre du signal de télévision à coder est décomposé en sous-bandes de la manière représentée à la figure 1 où différents niveaux de résolution d'une hiérarchie d'image définie par différents standards sont représentés dans un espace de Fourier à deux dimensions dans lequel sont consignées les fréquences spatiales de l'image mesurées en cycle par largeur et hauteur d'image. Sur la figure 1 seuls les standards HDP, EDP et VT désignant respectivement le format pour la haute définition progressive définie par des images de 1250 lignes transmises à la cadence de 50 images par seconde (1250/50/1:1), EDP désignant le format de définition étendue progressive (625/50/1:1) définie par des images de 625 lignes transmises à la cadence de 50 images par seconde, et VT désignant le format de l'image à 312 lignes progressives du vidéo téléphone (312/50/1:1) ont été représentés et il n'est considéré dans ce qui suit pour simplifier l'exposé que les signaux vidéo aux formats progressifs des standards HDP, EDP et VT, l'application du système et du procédé selon l'invention aux signaux entrelacés pouvant être réalisée en utilisant les signaux progressifs équivalents de la façon dont cela est décrit par exemple dans la demande de brevet FR-A-2 654 887.

Dans l'exemple de la figure 1, pour effectuer un codage-décodage compatible entre les trois standards représentés, chaque récepteur doit être capable de décoder et de visualiser, quelque soit son niveau propre de résolution, le signal qu'il reçoit et qui a un format quelconque parmi les 3 formats VT, EDP ou HDP. Ceci ramène le système de codage compatible à un système de codage multirésolution. Pour effectuer un codage compatible inter-image de signaux vidéo, le procédé selon l'invention effectue une décomposition hiérarchique et compatible en sous-bandes des images à transmettre. L'image qui est ainsi décomposée est reconstruite dans un décodeur de réception au moyen de cellules d'interpolation formées par la mise en cascade de plusieurs cellules. La reconstruction presque parfaite de l'image est obtenue en utilisant des filtres connus sous l'abréviation CQF du terme anglo-saxon "conjugate quadrature filter" ou encore des filtres connus sous l'abréviation QMF de "quadrature mirror filter". En utilisant ce principe de décomposition et de reconstruction, l'arbre minimal qui autorise un codage compatible entre les trois formats VT, EDP et HDP du spectre représenté à la figure 1 est un arbre à sept bandes. Dans cette décomposition l'exigence de compatibilité se traduit simplement par un traitement indépendant des trois parties du spectre, de la partie basse fréquence VT (bande 4), du spectre EDP et du spectre HDP. Selon l'invention toute prise en compte du mouvement de l'image est faite de façon indépendante dans chacune de ces trois parties. Cependant comme il apparaît qu'une découpe au moyen d'un arbre à sept bandes ne conduit pas à une décorrélation suffisante des signaux pour permettre une quantification scalaire efficace, des découpes supplémentaires sont nécessaires et en pratique un bon compromis est trouvé au moyen d'un arbre à seize bandes de la façon représentée à la figure 2.

Comme décrit précédemment, pour atteindre par exemple les débits de l'ordre de 0,8 bits par seconde il est nécessaire de prendre en compte la corrélation temporelle existant dans les séquences d'image, sans détruire les propriétés de compatibilité du système, c'est-à-dire en respectant les traitements indépendants des parties VT (bande 4), CEDP (bandes 5, 6, 7) et CHDP (bandes 1, 2, 3) du spectre de la figure 1, de façon à éviter tout phénomène de dérive au niveau des décodeurs. En effet, en prenant par exemple le cas d'un décodeur EDP, comme celui-ci ne peut utiliser que l'information contenue dans les bandes de basses fréquences, partie VT et partie complémentaire CEDP, du signal HDP de résolution supérieure transmis, si au niveau du codeur la compensation de mouvement est effectuée en utilisant toute l'information du signal HDP (parties VT, CEDP, CHDP), le décodeur EDP n'aura plus accès à l'information CHDP et dans ce cas ne pourra plus effectuer un traitement similaire à celui qui a été effectué au niveau du codeur. De ce fait un phénomène de dérive peut apparaître sur les images décodées.

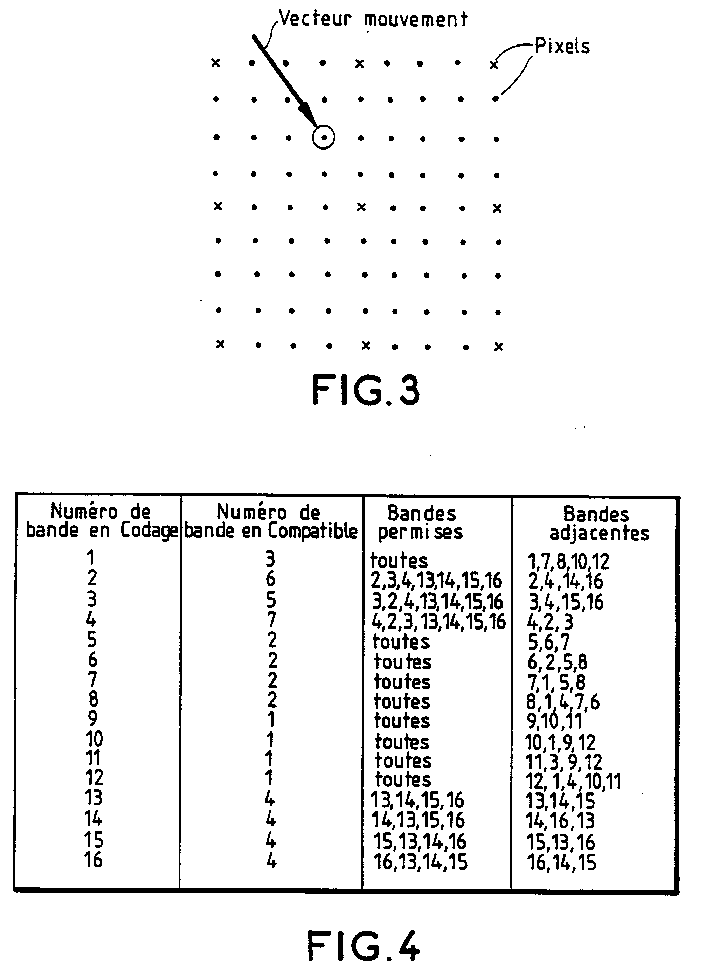

Une solution à ce problème consiste à utiliser des filtres d'interpolation pour interpoler les pixels dans chaque sous-bande en tenant compte des informations contenues dans les sous-bandes adjacentes. Le sous-échantillonnage des signaux permet de transformer la compensation de mouvement faite par pixel entier dans l'image pleine bande en pixels fractionnaires aux niveaux des sous-bandes. Ainsi comme le montre le maillage de la figure 3 les caractéristiques de certains pixels décimés au niveau d'une sous-bande peuvent ainsi être recalculées à partir des pixels conservés dans la sous-bande et de ceux conservés dans les sous-bandes adjacentes.

L'avantage de procéder ainsi résulte dans le fait que la maille d'échantillonnage reste analogue à la maille originale et que la compensation de mouvement peut alors être effectuée par un simple décodage si l'estimation du mouvement est faite en nombre entier de pixel. Ceci est obtenu notamment en utilisant des filtres de décomposition polyphase d'ordre N, qui décomposent leur réponse impulsionnelle $h(n)$ en N phases $h_j$, ou j est un entier compris entre 0 et N-1, définies par la relation

$$h_j(n) = h(j+nN)$$

Ces filtres ont la propriété de reconstruire tous les points décimés. Cependant comme il n'est nécessaire en fait que de reconstruire que les seuls pixels correspondant au mouvement estimé, le procédé selon l'invention vise à utiliser des filtres d'interpolation à composantes polyphases plus courtes, chacune correspondant à une valeur du vecteur mouvement, de façon à travailler avec des longueurs de composantes polyphase de même ordre que celles filtres d'analyses et de synthèse sous-bande.

Dans ces conditions le calcul de la contribution d'une bande j à l'interpolation d'un point d'une bande i peut être fait en prenant l'une des $N_j$ phases de la décomposition polyphase à l'ordre $N_j$ d'un filtre $K_{ij}$ et le numéro de la phase à prendre en compte est alors déterminé par le décalage V correspondant au vecteur mouvement. A titre d'exemple, si $K(n)$ est la réponse impulsionnelle du filtre $K_{ij}$, la décomposition polyphase d'ordre $N_j$ de ce filtre permet de définir $N_j$ phases $K_j$ de n°$_j$ où j est un entier allant de 0 à N-1 tel que,

$K_j(n) = K_{(j+n.Nj)}$. Ainsi pour un ordre de décomposition $N_j = 4$, la décomposition polyphase d'un filtre comportant n+1 échantillons de phase centrée sur l'échantillon d'ordre 0 donnera pour une suite ordonnée d'échantillons telles que (-6, -5...0,1...6), les échantillons suivants :

Phase 0 $K_j(-4)$, $K_j(0)$, $K_j(4)$, l'origine étant placée sur l'échantillon 0

Phase 1 $K_j(-3)$, $K_j(1)$, $K_j(3)$, l'origine étant placée sur l'échantillon 1

Phase 2 $K_j(-6)$, $K_j(-2)$, $K_j(2)$, $K_j(6)$, l'origine étant placée sur l'échantillon 2 et

Phase 3 $K_j(-5)$, $K_j(-1)$, $K_j(3)$, l'origine étant placée sur l'échantillon 3.

Ainsi si V est un multiple de $N_j$, la phase 0 du filtre est utilisée et rien n'est modifié, par contre, dans le cas contraire, le numéro de phase n à utiliser est défini par

$n = N_j$-R où R est le reste de la division de V par $N_j$. Comme déjà souligné précédemment l'interpolation d'un point d'une bande donnée doit, pour être parfaite, utiliser l'information contenue dans toutes les autres bandes, la contribution de ces bandes étant déterminée par les filtres $K_{ij}$. Du fait de la contrainte de compatibilité il n'est pas possible d'utiliser toutes les bandes mais en fait comme le montre le tableau de la figure 4 la contribution de toutes les bandes n'apparaît pas indispensable. Il apparaît que ce sont essentiellement les sous-bandes adjacentes à une sous-bande considérée qui contribuent le plus à l'interpolation de la sous bande considérée et que les contributions des autres sous-bandes peuvent être considérées comme négligeables.

En fait, en considérant l'arbre optimal à 16 bandes de la figure 2 l'utilisation des bandes adjacentes peut être limitée de la façon suivante.

Pour les bandes numérotées 13, 14, 15 et 16 l'interpolation n'aura à utiliser que l'information des bandes 13, 14, 15 et 16.

Pour les bandes 2, 3, 4 l'interpolation devra être limitée à l'utilisation des bandes 2, 3, 4, 13, 14, 15 et 16.

Pour les bandes 1, 5, 6, 7, 8, 9, 10, 11, 12 l'interpolation de ces bandes pourra utiliser les informations contenues dans toutes les autres bandes.

Cependant, comme le montre la dernière colonne du tableau de la figure 4 l'utilisation des bandes adjacentes peut être davantage limité en ne considérant pas les bandes adjacentes situées aux frontières délimitant les domaines VT, EDP, HDP, de façon à diminuer considérablement le nombre des opérations à effectuer et les accès mémoire.

Dans ce qui suit il est fait une distinction entre l'arbre de décomposition en sous-bandes de la figure 1, nécessaire à la compatibilité et l'arbre de décomposition de la figure 2 nécessaire au codage. Du tableau de la figure 4 il apparaît clairement qu'utiliser les bandes adjacentes avec la découpe en 7 bandes pour la compensation de mouvement est plus efficace que d'utiliser les bandes adjacentes avec la découpe à 16 bandes, et que celle-ci doit conduire à une réalisation beaucoup plus simple.

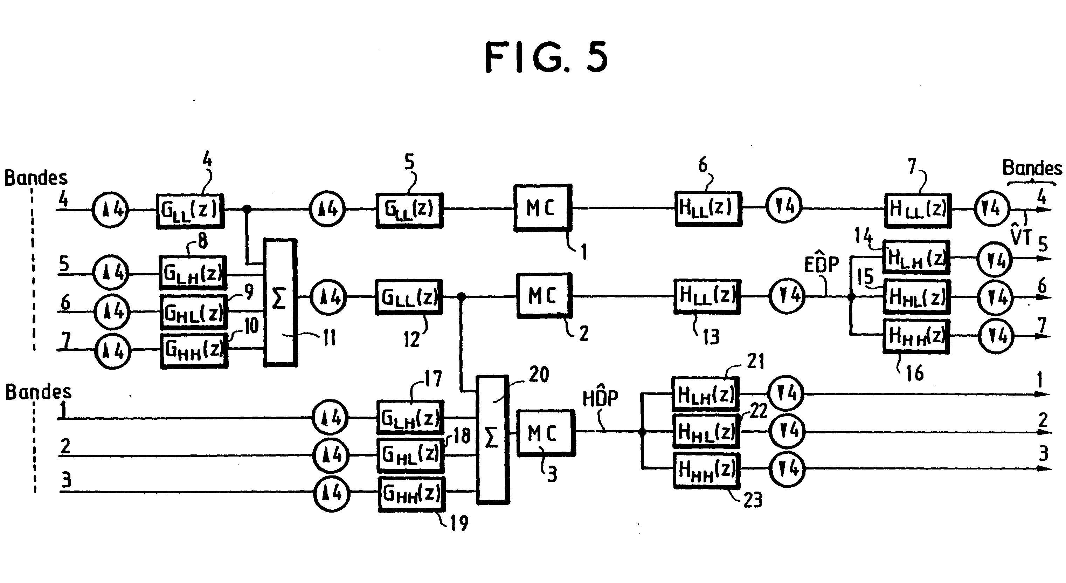

Un mode de réalisation d'un dispositif de compensation de mouvement correspondant est représenté à la figure 5. Cette réalisation évite de faire apparaître explicitement l'influence des bandes adjacentes. Dans ce mode de réalisation la compensation de mouvement a lieu séparément dans chacune des sous-bandes VT, EDP et HDP par des blocs de compensation de mouvement portant sur la figure 5 les références 1, 2, 3. Dans ce schéma la compensation de mouvement a lieu dans l'image courante en prenant en considération des pixels de l'image précédente. L'image est décomposée en 7 sous-bandes de la façon indiquée par l'arbre de décomposition de la figure 1.

Après deux sur-échantillonnages par 2 successifs dans les directions horizontale et verticale de l'image, le signal VT de la bande 4 est transformé dans la maille des pixels d'origine au moyen de deux filtres de reconstruction passe-bas 4 et 5 de fonction de transfert $G_{LL}(z)$.

Le signal obtenu est compensé en mouvement par le bloc de compensation de mouvement 1 et le résultat obtenu est ensuite décimé deux fois par 2 dans les directions horizontale et verticale de l'image pour donner après deux filtrages passe-bas successifs 6 et 7 de fonction de transfert $H_{LL}(z)$ une prédiction VT du signal VT dans l'image courante.

Les signaux des bandes 5, 6 et 7 sont également suréchantillonnés par deux dans les directions horizontale et verticale de l'image avant d'être appliquées à des filtres de reconstructions 8, 9 et 10 respectivement passe-bas et haut, passe-haut et passe-bas, et deux fois passe-haut dans les directions horizontale et verticale de l'image et de fonction de transfert notées respectivement $G_{LH}(z)$, $G_{HL}(z)$ et $G_{HH}(z)$.

Un circuit sommateur 11 additionne les signaux obtenus en sortie des filtres 4, 8, 9 et 10. Le signal résultant de cette addition est suréchantillonné par deux dans les directions horizontale et verticale de l'image et filtré par un filtre de reconstruction 12 passe-bas dans les deux directions horizontale et verticale de l'image. Le signal obtenu à la sortie du filtre 12 est compensé en mouvement par le bloc de compensation de mouvement 2 et le résultat obtenu est ensuite décimé deux fois par 2 dans les directions horizontale et verticale de l'image pour donner, après un premier filtrage par deux filtres 13 et 14 respectivement passe-bas dans les deux directions horizontale et verticale de l'image et de fonctions de transfert notées respectivement $H_{LL}(z)$ et $H_{LH}(z)$, un signal de prédiction dans la sous-bande 5. Un deuxième filtrage réalisé par le filtre 13 et un filtre 15 couplés en série donne, après deux décimations, un signal de prédiction corrigé en mouvement dans la bande 6 et un deuxième signal de filtrage réalisé par le filtre 13 et un filtre 16 couplés en série donne après deux décimations un signal de prédiction corrigé en mouvement dans la bande 7, les filtres 15 et 16 ayant des fonctions de transfert notées respectivement $H_{LL}(z)$ et $H_{HL}(z)$.

Les signaux des bandes 1, 2 et 3 sont aussi suréchantillonnés par deux dans les directions horizontale et verticale de l'image avant d'être appliqués à des filtres de reconstructions 17, 18 et 19 respectivement passe bas et haut, passe haut et bas, et deux fois passe haut dans les deux directions horizontale et verticale de l'image et de fonction de transfert notées respectivement $G_{LH}(z)$, $G_{HL}(z)$ et $G_{HH}(z)$. Les signaux filtrés obtenus sont appliqués à des entrées respectives d'un circuit additionneur 20, pour être additionnés au signal fourni par le filtre 12.

Le signal résultant de cette addition est appliqué à l'entrée du bloc de compensation de mouvement 3 pour être compensé en mouvement. Le signal compensé en mouvement obtenu est en fait un signal HDP reconstitué qui est à son tour décomposé dans les sous-bandes 1, 2 et 3 après décimation par 2 dans les directions horizontale et verticale de l'image, par des filtres 21, 22, 23 respectivement passe-bas et haut, passe haut et bas et deux fois passe haut et de fonctions de transfert notées respectivement $H_{LH}(z)$, $H_{HL}(z)$ et $H_{HH}(z)$.

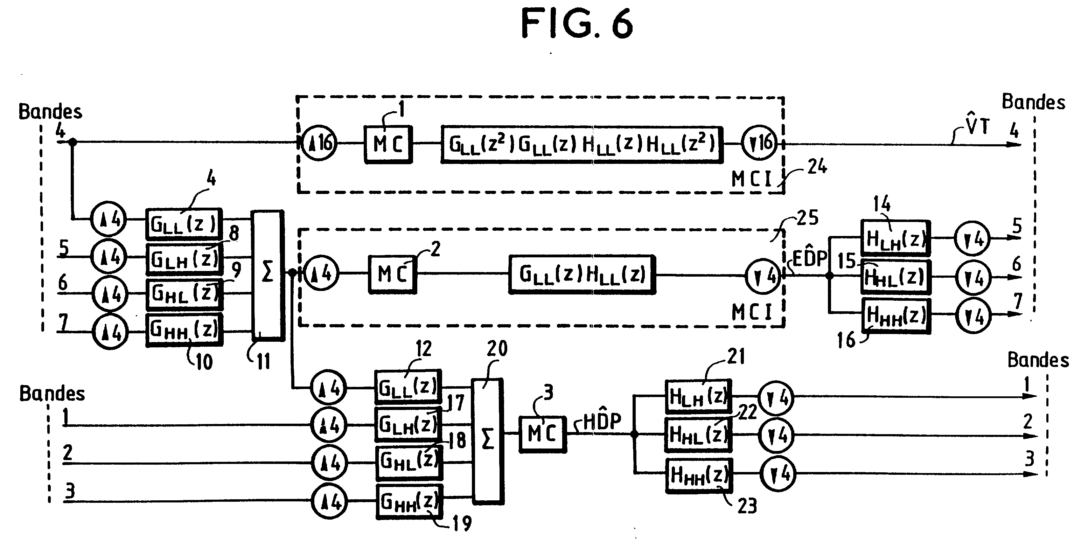

Un mode de réalisation d'un dispositif de compensation de mouvement équivalent à celui de la figure 5 est représenté à la figure 6, pour faire apparaître les fonctions de transfert équivalente aux combinaisons des filtres d'interpolation 4, 5, 6 et 7 d'une part, et 12 et 13 d'autre part.

La fonction de transfert résultante de l'ensemble des fonctions de transfert des filtres 4, 5, et 7 conduisant à une prédiction du signal VT dans la sous-bande 4 est représentée à l'intérieur du rectangle en pointillé 24 et a pour transformée en (z) la relation

$$a(z) = G_{LL}(z^2).G_{LL}(z).H_{LL}(z).H_{LL}(z^2).$$

La fonction de transfert résultante des fonctions de transfert des filtres 12 et 13, conduisant à une prédiction du signal EDP à l'entrée des filtres 14, 15 et 16, est représentée à l'intérieur du rectangle fermé en pointillés 25 et a pour transformée en (z) la relation $b(z) = G_{LL}(z).H_{LL}(z)$.

Comme expliqué précédemment les filtres de fonction de transfert $a(z)$ et $b(z)$ permettent de recalculer tous les pixels décimés. Or on ne s'intéresse qu'à ceux vers lesquels pointe un vecteur mouvement, cela signifie que ces filtres peuvent être décomposés en composantes polyphases plus courtes et donc plus facile à implanter.

Les autres éléments homologues à ceux de la figure 5 et ceux notamment conduisant à la prédiction HDP du signal HDP sont représentés avec les mêmes références.

Les modes de réalisation qui précèdent permettent d'effectuer des estimations de mouvement au pixel entier par rapport à la résolution de l'image pleine bande d'origine.

Il est clair que des schémas similaires à ceux précédemment décrits peuvent encore être réalisés pour des mouvements plus faibles, au demi pixel notamment, il suffit pour cela de créer les pixels qui n'existent pas dans l'image d'origine. Ceci peut être obtenu au moyen d'un filtre bilinéaire qui fait appel pour chaque pixel à interpoler aux quatre pixels de la maille originale voisins.

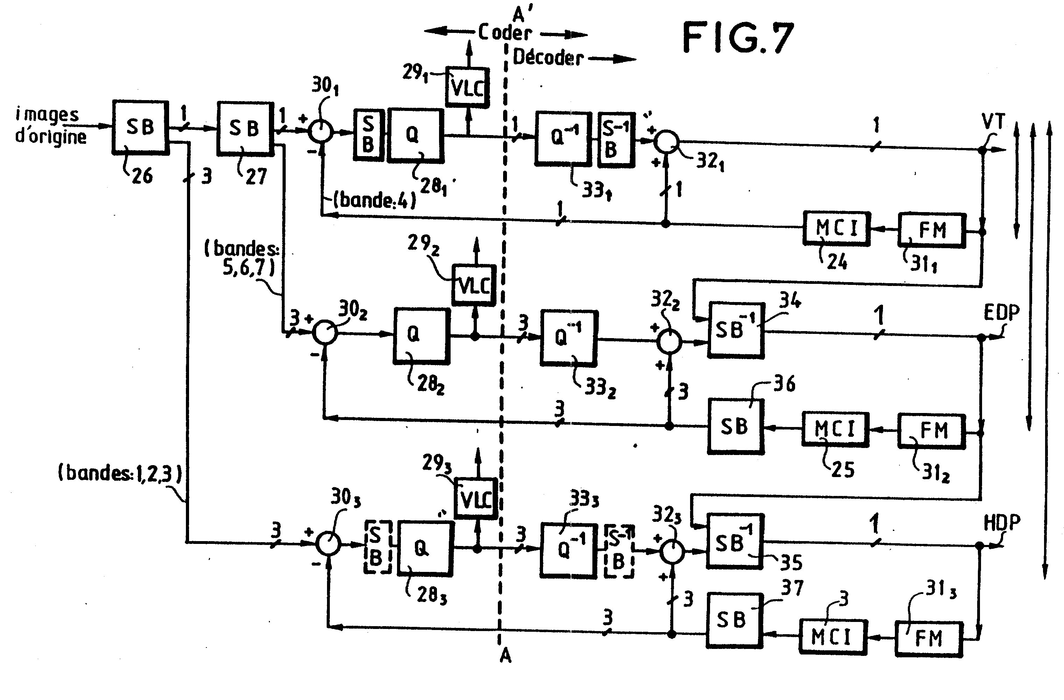

Un mode de réalisation d'un codeur-décodeur complet à trois niveaux incorporant le dispositif de compensation précédemment décrit est montré à la figure 7. Celui-ci comporte dans la partie codeur, des bancs de filtre d'analyse 26 et 27 décomposant l'image d'origine pleine bande dans les sous-bandes 1 à 7. Les bancs 26 et 27 distribue les signaux décimés par les filtres d'analyse 26 et 27 sur trois codeurs correspondant aux trois niveaux de résolution, ces codeurs étant formés par des circuits de quantification $28_i$ couplés à des dispositifs de codage à longueur variable $29_i$ où $i = 1$, 2 ou 3. Chaque codeur comprend également un circuit soustracteur $30_i$ pour soustraire de la valeur de chaque pixel à coder fourni par un filtre d'analyse une valeur de prédiction obtenue des blocs de compensation de mouvement 24, 25 et 3 décrits précédemment.

Ces blocs reçoivent d'une mémoire de trame $31_i$ les pixels de la trame qui précède la trame courante. Ceux-ci sont reconstitués par un circuit additionneur $32_i$ à partir de chaque donnée correspondante, codée par un codeur $29_i$ et déquantifiée par un déquantificateur $33_i$. Les pixels reconstitués de la trame précédente sont également appliqués à une entrée correspondante des circuits additionneurs $30_i$. Des filtres d'analyse 34, 35 permettent d'une part, d'ajouter les pixels de la bande VT aux pixels déquantifiés obtenus du circuit additionneur $32_2$ pour former les pixels de la bande EDP et d'autre part, d'ajouter les pixels de la bande EDP à ceux déquantifiés obtenus du circuit additionneur $32_3$ pour former les pixels de la bande HDP. Des filtres d'analyses 36 et 37 assurent l'interface entre les blocs de compensation de mouvement 25 et 3 avec les circuits additionneurs $32_2$ et $32_3$ ainsi qu'avec les circuits soustracteurs $30_2$ et $30_3$ respectivement.

Sur la figure 7 les éléments situés à droite de la ligne en pointillés AM' constitue également les décodeurs du système de transmission.

Naturellement le dispositif à trois boucles de prédiction qui vient d'être décrit qui permettent d'obtenir trois niveaux de compatibilité et auxquelles correspondent trois décodeurs VT, EDP et HDP, peut aussi être restreint à un dispositif comportant seulement deux boucles de prédiction à deux niveaux de compatibilité auxquels correspondent seulement deux décodeurs EDP et HDP.

## Revendications

1. Codeur sous-bande de signaux vidéo comprenant au moins un filtre d'analyse (26, 27) recevant une image vidéo et fournissant des signaux de sous-bande courante correspondant à différents niveaux de résolution de l'image, au moins deux soustracteur (30i) ayant chacun deux entrées, une première et une seconde et une sortie, le soustracteur recevant sur la première entrée le signal de sous-bande courante et sur la seconde entrée un signal de sous-bande prédite correspondant au même niveau de résolution, le soustracteur générant sur sa sortie un signal différentiel de sous-bande à transmettre, caractérisé en ce que le codeur comporte des moyens destinés à reconstituer des images de différents niveaux de résolution à partir des signaux de sous-bande transmis, un premier niveau correspondant à l'image de résolution la plus basse, et ces moyens comportant, pour chaque niveau de résolution donné :

   un additionneur (32i) ayant deux entrées, une première et une seconde et une sortie, l'additionneur recevant sur la première entrée le signal différentiel de sous-bande courante et sur la seconde entrée le signal de sous-bande prédite et fournissant sur sa sortie un signal de sous-bande reconstruite,
   un circuit de reconstruction d'image (34, 35) ayant des entrées et une sortie et recevant sur une entrée ou un groupe d'entrées le ou les signaux de sous-bande reconstruite correspondant à ce niveau de résolution donné et, sauf pour le premier niveau, sur une autre entrée l'image reconstruite du niveau de résolution inférieur, et restituant sur sa sortie une image reconstruite ayant le dit niveau de résolution,
   un circuit de prédiction de sous-bande ($31_1$, 24; $31_2$, 25, 36; $31_3$, 3, 37) ayant une entrée et une ou des sorties, l'entrée de ce circuit étant alimentée par la sortie du circuit de reconstruction d'image, les sorties portant les signaux de sous-bandes prédites.

2. Codeur selon la revendication 1, caractérisé en ce que les sous-bandes sont relatives au standard HDP, EDP et VT.

3. Codeur selon la revendication 1, caractérisé en ce que le circuit de reconstruction de l'image comporte un additionneur (11, 20) des signaux de sous-bandes reconstruites correspondant à la résolution de cette image, suréchantillonnés et filtrés (8, 9, 10 ; 17, 18, 19), avec les signaux suréchantillonnés et filtrés de l'image reconstruite de plus faible résolution (4, 12).

4. Codeur selon la revendication 2, caractérisé en ce que le circuit de reconstruction de l'image VT associé au circuit de prédiction de sous-bande correspondant à cette résolution comporte un dispositif de filtrage de fonction de transfert $G_{LL}(z^2).G_{LL}(z).H_{LL}(z).H_{LL}(z^2)$, couplé en entrée à un dispositif de suréchantillonnage 2 fois par 2 du standard VT, décodé dans les directions horizontales et verticales de l'image dans la trame précédant la trame courante par l'intermédiaire d'un dispositif de compensation de mouvement 1 et en sortie, à un dispositif de décimation 2 fois par 2 du signal obtenu dans les directions horizontales et verticales de l'image, $G_{LL}(z)$ et $H_{LL}(z)$ étant des fonctions de transfert de filtre passe-bas.

5. Codeur selon la revendication 2, caractérisé en ce que le circuit de reconstruction de l'image EDP associé au circuit de prédiction de sous-bande correspondant à cette résolution comporte un dispositif de filtrage de fonction de transfert $G_{LL}(z).H_{LL}(z)$ couplé en série avec un dispositif de compensation de mouvement 2 entre un dispositif de suréchantillonnage et un dispositif de décimation par deux dans les directions horizontales et verticales de l'image, un ensemble de filtres de reconstruction (4, 8, 9, 10) de l'image de résolution EDP à partir de sous-bandes reconstruites adjacentes à la bande VT couplé à l'entrée du dispositif de suréchantillonnage par deux, ainsi qu'un ensemble de filtres (14, 15, 16) couplés à la sortie du dispositif de décimation par 2 pour donner une prédiction dans chacune des sous-bandes adjacentes à la bande VT.

6. Codeur selon la revendication 2, caractérisé en ce que le circuit de reconstruction de l'image HDP associé au circuit de prédiction de sous-bande correspondant à cette résolution comporte un ensemble de filtres (12, 17, 18, 19) couplé à l'entrée d'un dispositif de compensation de mouvement 3 pour calculer une prédiction de l'image de résolution HDP en tenant compte des sous-bandes adjacentes à la sous-bande EDP et des filtres de décimation (21, 22, 23) couplé en sortie du dispositif de compensation de mouvements, pour fournir une prédiction dans chacune des sous-bandes adjacentes à la sous-bande EDP.

7. Codeur selon l'une des revendications précédentes, caractérisé en ce que le circuit de prédiction de sous-bande réalise une interpolation par compensation en mouvement (3, 24, 25) de l'image reconstruite.

8. Codeur selon la revendication 7, caractérisé en ce que l'interpolation est obtenue au moyen de filtres bilinéaires placés dans chaque boucle de prédiction.

9. Codeur selon l'une des revendications 4, 5 ou 6, caractérisé en ce que l'estimation de mouvement effectuée par les dispositifs de compensation de mouvement a lieu au ½ pixel.

10. Décodeur sous-bandes pour le décodage de signaux différentiels de type les signaux transmis par le codeur selon la revendication 1 et qui sont chacun la différence entre un signal de sous-bande courante et un signal de sous-bande prédite correspondant, et comportant, pour chaque niveau de résolution donné, un additionneur (32i) pour générer une sous-bande reconstruite à partir d'un signal différentiel de sous-bande et d'une sous-bande prédite, caractérisé en ce qu'il comporte des moyens destinés à reconstituer des images de différents niveaux de résolution à partir des signaux de sous-bande reçus, un premier niveau correspondant à l'image de résolution la plus basse, et ces moyens comportant, pour chaque niveau de résolution donné :

un circuit de reconstruction d'image (34, 35) ayant des entrées et une sortie et recevant sur une entrée ou un groupe d'entrées le ou les signaux de sous-bande reconstruite correspondant à ce niveau de résolution et, sauf pour le premier niveau, sur une autre entrée l'image reconstruite du niveau de résolution inférieur, et restituant sur une sortie une image reconstruite ayant le dit niveau de résolution, un circuit de prédiction de sous-bande ($31_1$, 24; $31_2$, 25, 36; $31_3$, 3, 37) ayant une entrée et une ou des sorties, l'entrée de ce circuit étant alimentée par la sortie du circuit de reconstruction d'image, les sorties portant les signaux de sous-bandes prédites.

11. Décodeur sous-bandes pour décoder des signaux de sous-bandes représentant des signaux de télévision à niveaux de résolution différents et pour générer des images reconstruites ayant lesdits niveaux de résolution différents, le décodeur comportant, pour chaque niveau de résolution donné, un circuit de reconstruction d'image et un circuit de prédiction de sous-bande tels que définis dans l'une des revendications 1 à 9.

**Patentansprüche**

1. Teilbandcodierer von Videosignalen mit mindestens einem Analysefilter (26, 27), das ein Videobild empfängt und Signale des aktuellen Teilbandes liefert, das verschiedenen Auflösungsebenen des Bildes entspricht, mindestens zwei Subtrahierern (30i) mit jeweils zwei Eingängen, einem ersten und einem zweiten und einem Ausgang, wobei der Subtrahierer am ersten Eingang das Signal des aktuellen und am zweiten Eingang ein Signal des vorhergesagten, derselben Auflösungsebene entsprechenden Teilbandes empfängt, wobei der Subtrahierer an seinem Ausgang ein zu übertragendes differentielles Teilbandsignal erzeugt, dadurch gekennzeichnet, daß der Codierer Mittel zum Rekonstruieren der Bilder mit unterschiedlichen Auflösungs-ebenen aus den übertragenen Teilbandsignalen umfaßt, wobei eine erste Ebene dem Bild mit der niedrigsten Auflösung entspricht, und wobei diese Mittel für jede gegebene Auflösungsebene folgendes umfassen:

einen Addierer (32i) mit zwei Eingängen, einem ersten und einem zweiten und einem Ausgang, wobei der Addierer an dem ersten Eingang das differentielle Signal des aktuellen Teilbandes und am zweiten Eingang das Signal des vorhergesagten Teilbandes empfängt und an seinem Ausgang ein Signal des rekonstruierten Teilbandes liefert,
eine Bildrekonstruktionsschaltung (34, 35) mit Eingängen und einem Ausgang, die an einem Eingang oder einer Gruppe von Eingängen das oder die Signal(e) des rekonstruierten, dieser gegebenen Auflösungsebene entsprechenden Teilbandes empfängt und, abgesehen von der ersten Ebene, an einem anderen Eingang das rekonstruierte Bild der niedrigeren Auflösungsebene emmpfängt und an ihrem Ausgang ein rekonstruiertes Bild mit der besagten Auflösungsebene wiederherstellt,
eine Teilbandprädiktionsschaltung ($31_1$, 24; $31_2$, 25, 36; $31_3$, 3, 37) mit einem Eingang und einem Ausgang oder Ausgängen, wobei der Eingang dieser Schaltung vom Ausgang der Bildrekonstruktionsschaltung gespeist wird und wobei die Ausgänge die Signale der vorhergesagten Teilbänder führen.

2. Codierer nach Anspruch 1, dadurch gekennzeichnet, daß die Teilbänder auf den Standard HDP, EDP bzw. VT bezogen sind.

3. Codierer nach Anspruch 1, dadurch gekennzeichnet, daß die Bildrekonstruktionsschaltung einen Addierer (11, 20) umfaßt, wobei die Signale der rekonstruierten Teilbänder der Auflösung dieses Bildes entsprechen und überabgetastet und gefiltert sind (8, 9, 10; 17, 18, 19), mit den überabgetasteten und gefilterten Signalen des rekonstruierten Bildes der niedrigsten Auflösung (4, 12).

4. Codierer nach Anspruch 2, dadurch gekennzeichnet, daß die VT-Bildrekonstruktionsschaltung, die mit der dieser Auflösung entsprechenden Teilbandprädiktionsschaltung verbunden ist, eine Filterungsvorrichtung mit einer Übertragungsfunktion $G_{LL}(z^2).G_{LL}(z).H_{LL}(z).H_{LL}(z^2)$ umfaßt, die am Eingang an eine Überabtastungsvorrichtung zweimal durch 2 des VT-Standards angekoppelt ist, welche in horizontalen und vertikalen Bildrichtungen in dem dem aktuellen Bild vorangehenden Bild mittels einer Bewegungskompensationsvorrichtung 1 decodiert ist, und am Ausgang an eine Dezimierungsvorrichtung zweimal durch 2 des erhaltenen Signals in den horizontalen und vertikalen Bildrichtungen angekoppelt ist, wobei $G_{LL}(z)$ und $H_{LL}(z)$ Tiefpaßfilter-Übertragungsfunktionen sind.

5. Codierer nach Anspruch 2, dadurch gekennzeichnet, daß die EDP-Bildrekonstruktionsschaltung, die mit der dieser Auflösung entsprechenden Teilbandprädiktionsschaltung verbunden ist, eine Filterungsvorrichtung mit Übertragungsfunktion $G_{LL}(z).H_{LL}(z)$, die in Reihe mit einer Bewegungskompensationsvorrichtung 2 zwischen eine Überabtastungsvorrichtung und eine Dezimierungsvorrichtung durch zwei in den horizontalen und vertikalen Bildrichtungen geschaltet ist, eine Gruppe von Rekonstruktionsfiltern (4, 8, 9, 10) des Bildes mit Auflösung EDP aus dem VT-Band benachbarten rekonstruierten Teilbändern die an den Eingang der Überabtastungsvorrichtung durch 2 angekoppelt sind wie auch eine Gruppe von Filtern (14, 15, 16), die an den Ausgang der Dezimierungsvorrichtung durch 2 angekoppelt sind, um eine Prädiktion in jedem der dem VT-Band benachbarten Teilbänder zu geben, geschaltet ist, umfaßt.

6. Codierer nach Anspruch 2, dadurch gekennzeichnet, daß die HDP-Bildrekonstruktionsschaltung, die mit der dieser Auflösung entsprechenden Teilbandprädiktionsschaltung verbunden ist, eine Gruppe von Filtern (12, 17, 18, 19), die an den Eingang einer Bewegungskompensationsvorrichtung 3 angekoppelt sind, um eine Prädiktion des Bildes mit Auflösung HDP unter Berücksichtigung der dem EDP-Teilband benachbarten Teilbänder zu berechnen, und Dezimationsfilter (21, 22, 23), die an den Ausgang der Bewegungskompensationsvorrichtung - angekoppelt sind, um eine Prädiktion in jedem der dem EDP-Teilband benachbarten Teilbänder zu liefern, umfaßt.

7. Codierer nach einem der vorhergehenden Ansprüche, dadurch gekennzeichnet, daß die Teilbandprädiktionsschaltung eine Interpolation durch Bewegungskompensation (3, 24, 25) des rekonstruierten Bildes realisiert.

8. Codierer nach Anspruch 7, dadurch gekennzeichnet, daß die Interpolation mittels in jede Prädiktionsschleife eingefügter bilinearer Filter erhalten wird.

9. Codierer nach einem der Ansprüche 4, 5 oder 6, dadurch gekennzeichnet, daß die durch die Bewegungskompensationsvorrichtungen bewirkte Bewegungsschätzung an einem halben Bildpunkt stattfindet.

10. Teilbanddecodierer zur Decodierung von diffentiellen Signalen der Art der vom Codierer nach Anspruch 1 übertragenen Signale, die jeweils die Differenz zwischen einem aktuellen Teilbandsignal und einem vorhergesagten entsprechenden Teilbandsignal sind und der für jede gegebene Auflösungsebene einen Addierer (32i) zum Erzeugen eines rekonstruierten Teilbandes aus einem differentiellen Teilbandsignal und einem vorhergesagten Teilband umfaßt, dadurch gekennzeichnet, daß er Mittel zum Rekonstruieren von Bildern mit unterschiedlichen Auflösungsebenen aus den empfangenen Teilbandsignalen umfaßt, wobei eine erste Ebene dem Bild mit der niedrigsten Auflösung entspricht, und wobei diese Mittel für jede gegebene Auflösungsebene folgendes umfassen:

eine Bildrekonstruktionsschaltung (34, 35) mit Eingängen und einem Ausgang, die an einem Eingang oder einer Gruppe von Eingängen das oder die dieser Auflösungsebene entsprechende(n) rekonstruierte(n) Signal(e) empfängt und, abgesehen von der ersten Ebene, an einem anderen Eingang das rekonstruierte Bild mit niedrigerer Auflösungsebene empfängt und an einem Ausgang ein rekonstruiertes Bild mit der besagten Auflösungsebene wiederherstellt,
eine Teilbandprädiktionsschaltung ($31_1$, 24; $31_2$, 25, 36, $31_3$, 3, 37) mit einem Eingang und einem Ausgang oder Ausgängen, wobei der Eingang dieser Schaltung durch den Ausgang der Bildrekonstruktionsschaltung gespeist wird, wobei die Ausgänge die vorhergesagten Teilbandsignale führen.

11. Teilbanddecodierer zum Decodieren von Teilbandsignalen, die Fernsehsignale mit unterschiedlichen Auflösungsebenen darstellen, und zum Erzeugen von rekonstruierten Bildern mit den besagten unterschiedlichen Auflösungsebenen, wobei der Decodierer für jede gegebene Auflösungsebene eine Bildrekonstruktionsschaltung und eine Teilbandprädiktionsschaltung nach einem der Ansprüche 1 bis 9 umfaßt.

## Claims

1. Video signals sub-band coder comprising at least one analysis filter (26, 27) receiving a video image and delivering signals of current sub-band corresponding to various levels of resolution of the image, at least two subtractors (30i) each having two inputs, a first and a second and an output, the subtractor receiving the signal of current sub-band on the first input and a signal of predicted sub-band corresponding to the same level of resolution on the second input, the subtractor generating on its output a sub-band differential signal to be transmitted, characterized in that the coder includes means intended to reconstitute images with various levels of resolution from the sub-band signals transmitted, a first level corresponding to the image of lowest resolution, and these means including, for each given level of resolution:

an adder (32i) having two inputs, a first and a second and an output, the adder receiving the differential signal of current sub-band on the first input and the signal of predicted sub-band on the second input and delivering a signal of reconstructed sub-band on its output,
an image reconstruction circuit (34, 35) having inputs and an output and receiving on an input or a group of inputs the signal or signals of reconstructed sub-band corresponding to this given level of resolution and, except for the first level, on another input the reconstructed image with the lower level of resolution, and restoring on its output a reconstructed image having the said level of resolution,
a sub-band prediction circuit ($31_1$, 24; $31_2$, 25, 36; $31_3$, 3, 37) having an input and one or more outputs, the input of this circuit being fed with the output from the image reconstruction circuit, the outputs carrying the signals of predicted sub-bands.

2. Coder according to Claim 1, characterized in that the sub-bands relate to the SHD, SED and VT standard.

3. Coder according to Claim 1, characterized in that the image reconstruction circuit includes an adder (11, 20) of the signals of reconstructed sub-bands corresponding to the resolution of this image, oversampled and filtered (8, 9, 10; 17, 18, 19), together with the oversampled and filtered signals of the reconstructed image of smaller resolution (4, 12).

4. Coder according to Claim 2, characterized in that the VT image reconstruction circuit associated with the sub-band prediction circuit corresponding to this resolution includes a filtering device with transfer function $G_{LL}(z^2).G_{LL}(z).H_{LL}(z).H_{LL}(z^2)$, coupled at input to a device for twice by 2 oversampling of the VT standard, decoded in the horizontal and vertical directions of the image in the frame preceding the current frame by way of a motion compensation device 1, and at output to a device for twice by 2 decimation of the signal obtained in the horizontal and vertical directions of the image, $G_{LL}(z)$ and $H_{LL}(z)$ being low-pass filter transfer functions.

5. Coder according to Claim 2, characterized in that the SED image reconstruction circuit associated with the sub-band prediction circuit corresponding to this resolution includes a filtering device with transfer function $G_{LL}(z) \cdot H_{LL}(z)$, coupled in series with a motion compensation device 2 between a device for oversampling and a device for decimation by two in the horizontal and vertical directions of the image, a set of filters (4, 8, 9, 10) for reconstructing the image of SED resolution from reconstructed sub-bands adjacent to the VT band, coupled to the input of the device for oversampling by two, as well as a set of filters (14, 15, 16) coupled to the output of the device for decimation by 2 in order to yield a prediction in each of the sub-bands adjacent to the VT band.

6. Coder according to Claim 2, characterised in that the SHD image reconstruction circuit associated with the sub-band prediction circuit corresponding to this resolution includes a set of filters (12, 17, 18, 19) coupled to the input of a motion compensation device 3 for calculating a prediction of the image of SHO resolution whilst taking into account the sub-bands adjacent to the SED sub-band and decimation filters (21, 22, 23) coupled at the output of the motion compensation device, in order to provide a prediction in each of the sub-bands adjacent to the SED sub-band.

7. Coder according to one of the preceding claims, characterized in that the sub-band prediction circuit carries out interpolation by motion compensation (3, 24, 25) of the reconstructed image.

8. Coder according to Claim 7, characterised in that the interpolation is obtained by means of bilinear filters placed in each prediction loop.

9. Coder according to one of Claims 4, 5 and 6, characterised in that the motion estimation performed by the motion compensation devices takes place to a ½ pixel.

10. Sub-band decoder for the decoding of differential signals of type the signals transmitted by the coder according to Claim 1 and which are each the difference between a signal of current sub-band and a corresponding signal of predicted sub-band and including, for each given level of resolution, an adder ($32i$) for generating a reconstructed sub-band from a sub-band differential signal and from a predicted sub-band, characterized in that it includes means intended to reconstitute images with various levels of resolution from the sub-band signals received, a first level corresponding to the image of lowest resolution, and these means including, for each given level of resolution:

> an image reconstruction circuit (34, 35) having inputs and an output and receiving on an input or a group of inputs the signal or signals of reconstructed sub-band corresponding to this level of resolution and, except for the first level, on another input the reconstructed image with the lower level of resolution, and restoring on an output a reconstructed image having the said level of resolution,
> a sub-band prediction circuit ($31_1$, 24; $31_2$, 25, 36; $31_3$, 3, 37) having an input and one or more outputs, the input of this circuit being fed with the output from the image reconstruction circuit, the outputs carrying the signals of predicted sub-bands.

11. Sub-band decoder for decoding sub-band signals representing television signals with different levels of resolution and for generating reconstructed images having the said different levels of resolution, the decoder including, for each given level of resolution, an image reconstruction circuit and a sub-band prediction circuit which are such as defined in one of Claims 1 to 9.

FIG.1

FIG.2

Vecteur mouvement

Pixels

# FIG.3

| Numéro de bande en Codage | Numéro de bande en Compatible | Bandes permises | Bandes adjacentes |
|---|---|---|---|
| 1 | 3 | toutes | 1,7,8,10,12 |
| 2 | 6 | 2,3,4,13,14,15,16 | 2,4,14,16 |
| 3 | 5 | 3,2,4,13,14,15,16 | 3,4,15,16 |
| 4 | 7 | 4,2,3,13,14,15,16 | 4,2,3 |
| 5 | 2 | toutes | 5,6,7 |
| 6 | 2 | toutes | 6,2,5,8 |
| 7 | 2 | toutes | 7,1,5,8 |
| 8 | 2 | toutes | 8,1,4,7,6 |
| 9 | 1 | toutes | 9,10,11 |
| 10 | 1 | toutes | 10,1,9,12 |
| 11 | 1 | toutes | 11,3,9,12 |
| 12 | 1 | toutes | 12,1,4,10,11 |
| 13 | 4 | 13,14,15,16 | 13,14,15 |
| 14 | 4 | 14,13,15,16 | 14,16,13 |
| 15 | 4 | 15,13,14,16 | 15,13,16 |
| 16 | 4 | 16,13,14,15 | 16,14,15 |

# FIG.4

FIG. 5

# FIG. 6

EP 0 542 974 B1

FIG.7

EP 0 542 974 B1